# EUROPÄISCHE PATENTSCHRIFT

(11) **EP 1 359 055 B1**
(45) Veröffentlichungstag und Bekanntmachung des Hinweises auf die Patenterteilung: **07.05.2008**
(21) Anmeldenummer: 03008819.9
(22) Anmeldetag: 24.04.2003
(51) Int. Cl.: B60R 13/04, B60R 13/02

(54) **Kraftfahrzeug-Zierleiste**
Finishing moulding for a vehicle
Baguette de décoration pour un véhicule

(30) Priorität: 04.05.2002 DE 20207098 U
(43) Veröffentlichungstag der Anmeldung: 05.11.2003
(73) Patentinhaber: Walter Klein GmbH & Co. KG, 42349 Wuppertal (DE)
(72) Erfinder: Mayer, Gert, 42119 Wuppertal (DE)
(74) Vertreter: Müller, Enno

(56) Entgegenhaltungen:
- DE-U- 29 807 369
- FR-A- 2 698 058
- FR-A- 2 792 896

## Beschreibung

Die Erfindung betrifft eine Kraftfahrzeug-Zierleiste, welche mehrteilig aufgebaut ist, wobei die Zierleiste eine Sichtseite aufweist und aus zwei im Querschnitt U-förmig gestalteten Leistenteilen besteht, wobei weiter beide Leistenteile aus einem Hartwerkstoff, wie Metall, bspw. Aluminium, oder Hartkunststoff bestehen.

Eine Kraftfahrzeug-Zierleiste der in Rede stehenden Art ist aus dem DE-U1 298 07 369, das die Merkmale des Oberbegriffs des Anspruchs 1 zeigt, bekannt, bei welcher die Leistenteile unter Übereinanderlage der U-Schenkel durch unmittelbare Verrastung gegeneinander gehaltert sind.

Im Hinblick auf den zuvor beschriebenen Stand der Technik wird eine technische Problematik der Erfindung darin gesehen, eine Kraftfahrzeug-Zierleiste der in Rede stehenden Art hinsichtlich der gegenseitigen Halterung der Leistenteile in vorteilhafter Weise zu verbessern.

Diese Problematik ist zunächst und im Wesentlichen durch den Gegenstand des Anspruchs 1 gelöst, wobei darauf abgestellt ist, dass die Leistenteile unter Übereinanderlage der U-Schenkel durch eine Einschubverbindung gegeneinander gehaltert sind. Zufolge dieser Ausgestaltung ist eine Kraftfahrzeug-Zierleiste angegeben, welche kostengünstig und in einfachster Weise aus zwei Leistenteilen herstellbar ist. Diese Leistenteile werden von Hand ineinander geschoben, wobei die zugeordneten Flächen der Leistenteile im Wesentlichen zueinander parallel ausgerichtet sind. Bevorzugt kommen hierbei für die Leistenteile Strangpressprofile zum Einsatz, welche aus Metall, bspw. Aluminium oder einem Hartkunstwerkstoff bestehen, wobei nicht nur Paarungen gleichen Werkstoffes, sondern auch gemischte Paarungen, bspw. eine Aluminiumleiste und eine Hartkunststoffleiste, zum Einsatz kommen können. Die Profile sind insbesondere im Bereich der korrespondierenden Flächen so gewählt, dass die Leistenteile nach einem Ineinanderschieben reibschlüssig gegeneinander gehaltert sind. Als besonders vorteilhaft erweist sich bei der erfindungsgemäßen Ausgestaltung, dass in einfachster Weise eine getrennte Entsorgung der Leistenteile erreicht werden kann. Der Reibschluss zwischen den Leistenteilen ist hierbei so eingestellt, dass die Einschubverbindung wieder von Hand aufgelöst werden kann. Zufolgedessen sind Leistenteile aus unterschiedlichen Werkstoffen bei einer Altautoentsorgung den verschiedenen Recycling-Prozessen zuführbar. Als besonders vorteilhaft erweist sich hierbei, dass die Leistenteile spannungsfrei übereinander geschoben sind und eine eingeschobene und eine aufgeschobene Leiste ausformen. Eine Federwirkung eines Schenkels eines der Leistenteile ist zufolge der Ausgestaltung nicht gegeben. In einfachster Weise können zur Realisierung der Einschubverbindung die korrespondierenden Flächen der U-Schenkel der beiden Leistenteile eben ausgebildet sein. Darüber hinaus ist es jedoch auch denkbar, zur Verbesserung des gewünschten Reibschlusses bspw. auf den Schenkelaußenflächen des eingeschobenen Leistenteiles rippenartige Vorsprünge auszuformen. Damit der erreichte Formschluss in der Einschubstellung stets gesichert ist, liegt zumindest einer der U-Schenkel des einen Leistenteiles an dem zugeordneten U-Schenkel des anderen Leistenteiles flächig an. Ein optisch günstiger Effekt lässt sich dadurch realisieren, dass das das innere U-Profil ausbildende Leistenteil endseitig eines der U-Schenkel in einen äußeren Sichtabschnitt übergeht. Dieser ist so beschaffen, dass der den U-Schenkel gegenüber dem weiteren U-Schenkel, im Querschnitt gesehen, verlängert. In vorteilhafter Weise ist der Sichtabschnitt dazu herangezogen, dass er zusammen mit der Außenfläche desselben U-Schenkels eine Nut ausformt, in welcher ein freier Endabschnitt eines U-Schenkels des anderen Leistenteils aufgenommen ist, so dass dieser U-Schenkel im Zuge des Einschiebens in der Nut geführt ist. Auch wird vorgeschlagen, dass ein Schenkel des einen Leistenteils auf der der Sichtfläche abgewandten Seite eine Aufsetzstufe ausbildet, auf welcher ein Schenkel des innensitzenden Leistenteils stirnseitig aufsitzt. Zudem erweist es sich als vorteilhaft, dass die eingeschobene Leiste im Einschubbereich einen U-Querschnitt aufweist mit abschnittsweise parallel verlaufenden Schenkeln. Diese U-Schenkel sind im Wesentlichen starr ausgebildet, so dass sich der gewählte Querschnitt auch nach einem Einschieben der Leiste nicht ändert. Auch wird vorgeschlagen, dass die beiden Leisten durch eine stirnseitige Kappe gegeneinander verschiebegesichert sind, wobei bevorzugt die Kappe in den U-Schenkelraum der eingeschobenen Leiste greift und hierdurch über eine relativ große Strecke in Anlage an den Leistenteilen ist. So ist die Reibsicherung der beiden Leistenteile zueinander erhöht. Diesbezüglich wird weiter vorgeschlagen, dass ein Schenkel der Kappe hinter den, der Sichtseite abgewandten Schenkel der aufgeschobenen Leiste greift. Bevorzugt dient die Kappe als Keilsicherung gegen Verschieben der Leistenteile. Weiter ist auch eine Rastsicherung denkbar, wobei die Kappe einen, einen U-Schenkel der eingeschobenen Leiste und/oder einen U-Schenkel der aufgeschobenen Leiste zugewandten Rastnocken aufweist. Letzterer wirkt bevorzugt senkrecht zur Leistenlängserstreckung. Als vorteilhaft erweist sich hierbei, dass ein Rastnocken der Kappe in eine Ausklinkung einer Leiste eingreift. Zudem erweist es sich als vorteilhaft, dass zwei gegenüberliegende Rastnocken ausgeformt sind, die in eine gemeinsame Ausklinkung der eingeschobenen und der aufgeschobenen Leiste eingreifen. Schließlich ist vorgesehen, dass die Kappe als Kunststoffkappe ausgebildet ist, wobei weiter letztere im Kunststoff-Spritzverfahren hergestellt sein kann.

Nachstehend ist die Erfindung anhand der beigefügten Zeichnungen, welche lediglich zwei Ausführungsbeispiele darstellen, näher erläutert. Es zeigt:
- Fig. 1: in perspektivischer Darstellung einen Abschnitt einer erfindungsgemäß gestalteten Kraftfahrzeug-Zierleiste;

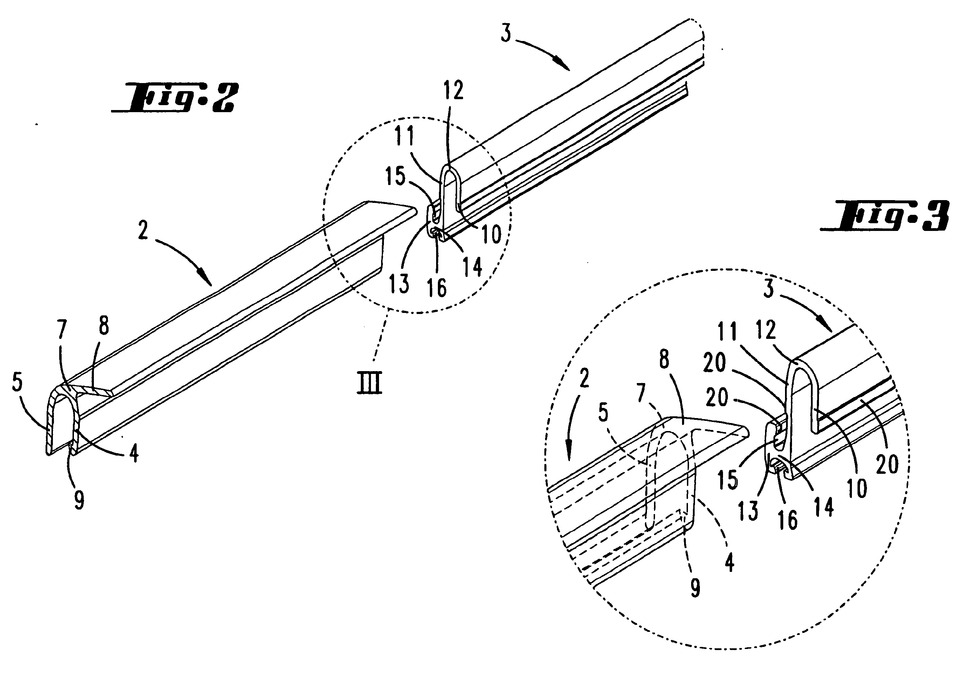

- Fig. 2: eine perspektivische Darstellung der beiden übereinanderschiebbaren Leistenteile;
- Fig. 3: eine Herausvergrößerung des Bereiches III in Fig. 2;
- Fig. 4: den stark vergrößerten Schnitt gemäß der Linie IV-IV in Fig. 1 eine erste Ausführungsform der Zierleiste betreffend;
- Fig. 5: eine der Fig. 4 entsprechende Querschnittdarstellung, jedoch eine zweite Ausführungsform der Kraftfahrzeug-Zierleiste betreffend;
- Fig. 6: eine perspektivische Darstellung eines Endbereiches der Zierleiste mit einer zuordbaren Kappe;
- Fig. 7: eine der Fig. 6 entsprechende perspektivische Darstellung bei aufgesteckter Kappe;
- Fig. 8: den vergrößerten Schnitt gemäß der Linie VIII-VIII in Fig. 7.

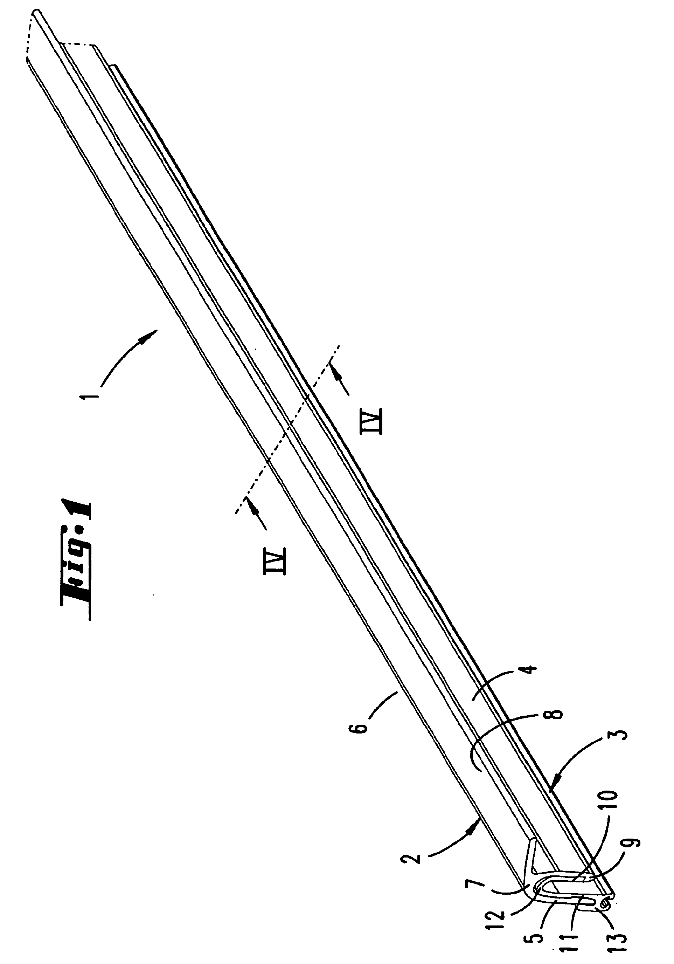

Dargestellt und beschrieben ist zunächst mit Bezug zu Fig. 1 eine Kraftfahrzeug-Zierleiste 1, welche insbesondere zur Einfassung von Fensterausschnitten dient. Diese Zierleiste 1 setzt sich zusammen aus zwei im Querschnitt U-förmig gestalteten Leistenteilen 2 und 3, wobei gemäß einem ersten Ausführungsbeispiel für beide Leistenteile 2, 3 eine Aluminiumlegierung gewählt ist derart, dass die Oberfläche des Leistenteils 2 schwarz und die des Leistenteils 3 blank eloxiert ist. Beide Leistenteile 2 und 3 sind als Strangpressprofile ausgeformt.

Zur Bildung der Zierleiste 1 sind die beiden Leistenteile 2 und 3 unter Übereinanderlage der U-Schenkel durch eine Einschubverbindung gegeneinander gehaltert.

Die U-Schenkel 4 und 5 des äußeren, aufgeschobenen Leistenteiles 2 sind unterschiedlich lang derart, dass der einer Sichtseite 6 der Zierleiste 1 zugewandte U-Schenkel 5 den gegenüberliegenden U-Schenkel 4 überragt. In dem dargestellten Ausführungsbeispiel ist hierbei ein Längenverhältnis von Schenkel 5 zu Schenkel 4 von etwa 1,5 : 1 gewählt. Der U-Schenkel 5 geht unter Ausbildung eines stumpfen Winkels in den innenseitig gerundet verlaufenen U-Steg 7 über. Tangential schließt sich an diesen der U-Schenkel 4 an, welcher in seiner Dicke etwas geringer gewählt ist als der U-Schenkel 5. Gemäß dem dargestellten Ausführungsbeispiel kann der U-Schenkel 4 eine Dicke von ca. 1 mm und der U-Schenkel 5 eine Dicke von ca. 1,3 mm aufweisen. Der U-Steg 7 geht seinerseits in stufenlosem Übergang in eine Zunge 8 über, welche mit dem U-Schenkel 4 einen Winkel α von ca. 100 bis 120° einschließt.

Im Bereich des freien Endes weist der, der Sichtseite 6 abgewandte U-Schenkel 4 eine in den U-Raum nach innen weisende Aufsetzstufe 9 auf.

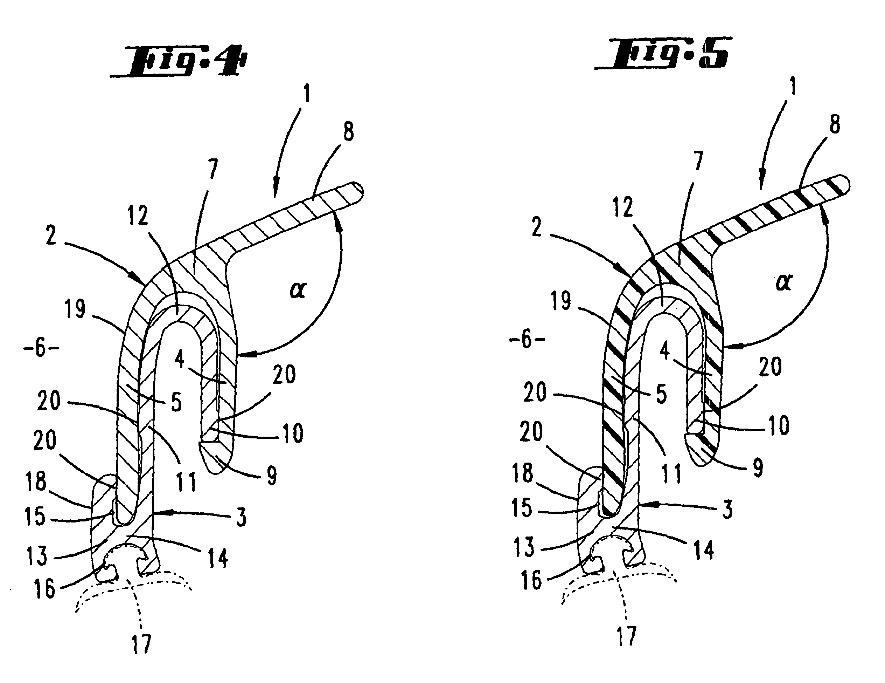

Die U-Schenkel 10 und 11 des inneren, eingeschobenen Leistenteils 3 sind über einen halbkreisförmigen U-Steg 12 miteinander verbunden. Der, der Sichtseite 6 der Zierleiste 1 abgewandte U-Schenkel 10 ist in seiner Länge etwas kürzer gewählt als der U-Schenkel 4 des äußeren Leistenteiles 2. In der eingeschobenen Stellung stützt sich das eingeschobene Leistenteil 3 mit der Stirnfläche des U-Schenkels 10 auf der Aufsetzstufe 9 des U-Schenkels 4 des äußeren Leistenteiles 2 ab (vergl. Fig. 4).

Wie weiter aus der Schnittdarstellung in Fig. 4 zu erkennen, erstreckt sich der U-Steg 12 mit geringem Abstand unterhalb des U-Steges 7 des äußeren Leistenteiles 2.

Der zu dem zuvor beschriebenen U-Schenkel 10 im Wesentlichen parallel verlaufende U-Schenkel 11 ist in seiner Länge etwas größer gewählt als der zugeordnete U-Schenkel 5 des äußeren Leistenteiles 2 und formt endseitig einen H-förmigen Abschnitt 13 aus, wobei der U-Schenkel 11 zugleich einen der Sichtseite 6 abgewandten H-Schenkel ausformt.

Die oberhalb des H-Stegs 14 ausgeformte Nut 15 nimmt den freien Endabschnitt des U-Schenkels 5 des äußeren Leistenteiles 2 auf. Auf der der Nut 15 gegenüberliegenden Seite des H-Stegs 14 ist eine weitere Aufnahmenut 16 ausgeformt, bspw. zur Halterung einer wie in der Darstellung in strichpunktierter Linienart gezeigten Lippendichtung 17 oder dergleichen.

Der etwa parallel zu dem U-Schenkel 11 verlaufende, äußere H-Schenkel des Abschnittes 13 formt einen Sichtabschnitt 18 aus, welcher gegenüber dem U-Schenkel 5 des äußeren Leistenteiles 2, in Querrichtung betrachtet, versetzt nach außen angeordnet ist. Wie erwähnt, kann die Oberfläche des Leistenteiles 3 und somit auch der Sichtabschnitt 18 blank eloxiert sein, womit sich dieser optisch abhebt gegenüber dem bspw. mit einer schwarzen Oberfläche versehenen Sichtabschnitt 19 des äußeren Leistenteiles 2.

Die beiden Leistenteile 2 und 3 werden zur Montage ineinander geschoben, wobei das einzuschiebende Leistenteil 3 mit seinem U-förmigen Abschnitt in den U-förmigen Einschubbereich des äußeren, aufzuschiebenden Leistenteiles 2 eingeführt wird. Hiernach sind die beiden Leistenteile 2, 3 reibschlüssig gegeneinander gehaltert, welcher Reibschluss darüber hinaus noch verstärkt werden kann durch in Längserstreckung des Leistenteiles 3 verlaufende Rippen 20. So ist, wie in Fig. 4 zu erkennen, eine Rippe 20 im freien Endbereich des U-Schenkels 10 außenseitig zur Wirkung mit der Innenfläche des U-Schenkels 4 des außenseitigen Leistenteiles 2 angeordnet. Dieser Rippe 20 gegenüberliegend ist eine weitere Rippe 20 an dem U-Schenkel 11 außenseitig zur Zusammenwirkung mit dem U-Schenkel 5 ausgeformt. Zudem kann eine Rippe 20 innenseitig an dem sichtabschnittseitigen H-Schenkel des Abschnittes 13 zur Zusammenwirkung mit dem freien Endabschnitt des U-Schenkels 5 ausgeformt sein. Alle Rippen 20 besitzen eine Höhe, die sich im Zehntelmillimeterbereich bewegt.

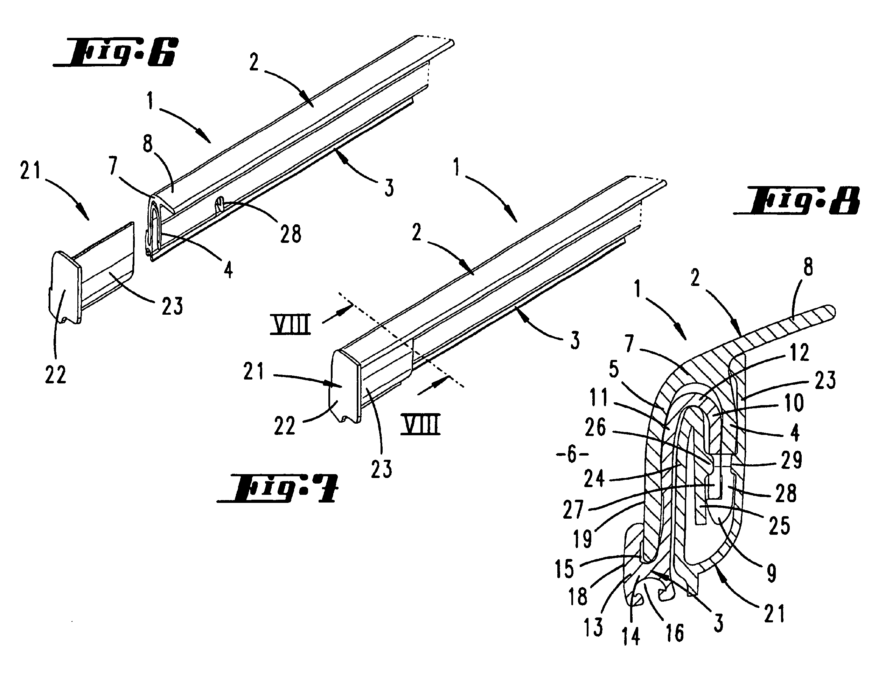

Wie aus den Darstellungen in den Fig. 6 bis 8 zu erkennen, ist endseitig der Zierleiste 1 eine Kappe 21, insbesondere eine Kunststoffkappe, vorgesehen. Diese dient neben der Ausbildung eines optisch ansprechenden Abschlusses auch zur weiteren Verschiebesicherung der Leistenteile 2, 3 gegeneinander.

Die Kappe 21 ist mit einem, die Stirnflächen der Leistenteile 2, 3 überdeckenden und an die Außenkontur angepassten Wandabschnitt 22 versehen, von welchem in Längserstreckung der Leistenteile 2, 3 gerichtete Zungen 23, 24 ausgehen. Diese Zungen 23 und 24 sind im Querschnitt etwa U-förmig angeordnet, wobei die eine Zunge 23 bei aufgesteckter Kappe 21 hinter den, der Sichtseite 6 abgewandten Schenkel 4 des aufgeschobenen Leistenteiles 2 greift und die andere Zunge 24 in dem U-Raum des eingeschobenen Leistenteiles 3 einliegt. Diese Zunge 24 ist im Querschnitt etwa V-förmig ausgebildet mit einer nach unten weisenden V-Öffnung, wobei ein V-Schenkel etwa parallel zum U-Schenkel 11 des innenliegenden Leistenteiles 3 verläuft und der andere V-Schenkel als Federabschnitt 25 ausgebildet ist. Dieser Federabschnitt 25 trägt einen in Richtung auf den zugeordneten U-Schenkel 10 weisenden Rastnocken 26, welcher in eine entsprechend positionierte Ausklinkung 27 des U-Schenkels 10 eingreift.

Auch die Zunge 23 weist federnde Eigenschaften auf und trägt innenwandig einen, mit einer Ausklinkung 28 des U-Schenkels 4 des äußeren Leistenteiles 2 zusammenwirkenden Rastnocken 29. Letzterer ist gegenüberliegend dem Rastnocken 26 des Federabschnittes 25 positioniert. Die Ausklinkungen 27 und 28 liegen deckungsgleich übereinander.

Die Kappe 21 ist bevorzugt als Kunststoffkappe im Kunststoff-Spritzverfahren hergestellt, womit auch in einfachster Weise die federnden Eigenschaften von Federabschnitt 25 und Zunge 23 realisiert sind.

Durch das Aufstecken der Kappe 21 auf das Ende der Zierleiste 1 und das damit einhergehende Einrasten der Rastnocken 26, 29 in die Ausklinkungen 27, 28 ist eine Verschiebesicherung der Leistenteile 2, 3 gegeneinander gegeben. Darüber hinaus wirkt die Kappe 21 mit ihren Zungen 23, 24 als Keilsicherung.

Wie aus der Schnittdarstellung in Fig. 5 zu erkennen, kann die Zierleiste 1 gemäß einer zweiten Ausführungsform auch aus zwei unterschiedlichen Hartwerkstoffen bestehen. So ist hier das äußere, aufgeschobene Leistenteil 2 aus einem Hartkunststoff geformt. Das innere, eingeschobene Leistenteil 3 ist gemäß der ersten Ausführungsform aus einem Aluminium-Strangpressprofil gebildet.

Durch die erfindungsgemäße Einschubverbindung ist auch bei einer Altautoentsorgung das getrennte Recyceln der beiden Leistenteile 2, 3 ermöglicht, indem diese in einfachster Weise von Hand wieder auseinandergezogen werden.

## Patentansprüche

1. Kraftfahrzeug-Zierleiste (1), welche mehrteilig aufgebaut ist, wobei die Zierleiste (1) eine Sichtseite (6) aufweist und aus zwei im Querschnitt U-förmig gestalteten Leistenteilen (2, 3) besteht, wobei weiter beide Leistenteile (2, 3) aus einem Hartwerkstoff, wie Metall, bspw. Aluminium, oder Hartkunststoff bestehen, **dadurch gekennzeichnet, dass** die Leistenteile (2, 3) unter Übereinanderlage der U-Schenkel (4, 5, 10, 11) durch eine Einschubverbindung gegeneinander gehaltert sind.

2. Kraftfahrzeug-Zierleiste nach Anspruch 1, **dadurch gekennzeichnet, dass** die Leistenteile (2, 3) spannungsfrei übereinander geschoben sind und ein eingeschobenes (3) und ein aufgeschobenes Leistenteil (2) ausformen.

3. Kraftfahrzeug-Zierleiste nach einem oder mehreren der vorhergehenden Ansprüche, **dadurch gekennzeichnet, dass** ein Schenkel (4) des einen Leistenteils (2) auf der der Sichtfläche (6) abgewandten Seite eine Aufsetzstufe (9) ausbildet, auf welcher ein Schenkel (10) des innensitzenden Leistenteils (3) stirnseitig aufsitzt.

4. Kraftfahrzeug-Zierleiste nach einem oder mehreren der vorhergehenden Ansprüche, **dadurch gekennzeichnet, dass** das eingeschobene Leistenteil (3) im Einschubbereich einen U-Querschnitt aufweist mit abschnittsweise parallel verlaufenden Schenkeln (10, 11).

5. Kraftfahrzeug-Zierleiste nach einem oder mehreren der vorhergehenden Ansprüche, **dadurch gekennzeichnet, dass** die beiden Leistenteile (2, 3) durch eine stirnseitige Kappe (21) gegeneinander verschiebegesichert sind.

6. Kraftfahrzeug-Zierleiste nach einem oder mehreren der vorhergehenden Ansprüche, **dadurch gekennzeichnet, dass** die Kappe (21) in den U-Schenkelraum des eingeschobenen Leistenteils (3) greift.

7. Kraftfahrzeug-Zierleiste nach einem oder mehreren der vorhergehenden Ansprüche, **dadurch gekennzeichnet, dass** ein Schenkel der Kappe (21) hinter dem, der Sichtseite (6) abgewandten Schenkel (4) des aufgeschobenen Leistenteils (2) greift.

8. Kraftfahrzeug-Zierleiste nach einem oder mehreren der vorhergehenden Ansprüche, **dadurch gekennzeichnet, dass** die Kappe (21) einen, einem U-Schenkel (10) des eingeschobenen Leistenteils (3) und/ oder einem U-Schenkel (4) des aufgeschobenen Leistenteiles (2) zugewandten Rastnokken (26, 29) aufweist.

9. Kraftfahrzeug-Zierleiste nach einem oder mehreren der vorhergehenden Ansprüche, **dadurch gekennzeichnet, dass** ein Rastnocken (26, 29) der Kappe (21) in eine Ausklinkung (27, 28) eines Leistenteils (2, 3) eingreift.

10. Kraftfahrzeug-Zierleiste nach einem oder mehreren der vorhergehenden Ansprüche, **dadurch gekennzeichnet, dass** zwei gegenüberliegende Rastnokken (26, 29) ausgeformt sind, die in eine gemeinsame Ausklinkung (27, 28) des eingeschobenen (3) und des aufgeschobenen Leistenteils (2) eingreifen.

11. Kraftfahrzeug-Zierleiste nach einem oder mehreren der vorhergehenden Ansprüche, **dadurch gekennzeichnet, dass** die Kappe (21) als Kunststoffkappe ausgebildet ist.

## Claims

1. A moulding (1) for a motor vehicle which is formed from a plurality of parts, the moulding (1) having a visible side (6) and consisting of two strip parts (2, 3) which are of U-shaped configuration in cross-section, the two strip parts (2, 3) further consisting of a hard material, such as metal, for example aluminium, or hard plastics, **characterized in that** the strip parts (2, 3) are held relative to one another by a slide-in connection with the U-limbs (4, 5, 10, 11) being placed one over the other.

2. A motor-vehicle moulding according to Claim 1, **characterized in that** the strip parts (2, 3) are slid over one another in a stress-free manner and form a inserted strip part (3) and a strip part (3) into which a sliding action takes place.

3. A motor-vehicle moulding according to one or more of the preceding claims, **characterized in that** one limb (4) of one (2) of the strip parts forms a support step (9) on the side directed away from the visible side (6), on which step an end face of a limb (10) of the inwardly seated strip part (3) is seated.

4. A motor-vehicle moulding according to one or more of the preceding claims, **characterized in that** the inserted strip part (3) has a U-cross-section in the slide-in region with limbs (10, 11), portions of which run parallel.

5. A motor-vehicle moulding according to one or more of the preceding claims, **characterized in that** the two strip parts (2, 3) are secured against displacement relative to one another by a cap (21) at their end.

6. A motor-vehicle moulding according to one or more of the preceding claims, **characterized in that** the cap (21) engages in the U-limb space of the inserted strip part (3).

7. A motor-vehicle moulding according to one or more of the preceding claims, **characterized in that** a limb of the cap (21) engages behind the limb (4) of the strip part (2) into which the sliding action takes place, on the side of the limb (4) which is directed away from the visible side (6).

8. A motor-vehicle moulding according to one or more of the preceding claims, **characterized in that** the cap (21) has a latching protrusion (26, 29) which faces a U-limb (10) of the inserted strip part (3) and/or a U-limb (4) of the strip part (2) into which the sliding action takes place.

9. A motor-vehicle moulding according to one or more of the preceding claims, **characterized in that** a latching protrusion (26, 29) of the cap (21) engages in a notch (27, 28) of a strip part (2, 3).

10. A motor-vehicle moulding according to one or more of the preceding claims, **characterized in that** two opposing latching protrusions (26, 29) are formed, which engage in a common notch (27, 28) of the inserted strip part (3) and the strip part (2) into which the sliding-in action takes place.

11. A motor-vehicle moulding according to one or more of the preceding claims, **characterized in that** the cap (21) is formed as a plastics cap.

## Revendications

1. Baguette de décoration (1) pour véhicule automobile, construite en plusieurs parties, la baguette de décoration (1) présentant une face visible (6) et étant composée de deux parties de baguette (2, 3) à section transversale en forme de U, en outre les deux parties de baguette (2, 3) étant composées d'un matériau dur, tel que du métal, par exemple de l'aluminium ou une matière synthétique dure, **caractérisée en ce que** les parties de baguette (2, 3) sont maintenues l'une contre l'autre en position de superposition des branches de U (4, 5, 10, 11) par une liaison à enfichage.

2. Baguette de décoration pour véhicule automobile selon la revendication 1, **caractérisée en ce que** les parties de baguette (2, 3) sont coulissées l'une sur l'autre sans contrainte, et en formant une partie de baguette (3) enfichée intérieurement et une partie de baguette (2) enfichée extérieurement.

3. Baguette de décoration pour véhicule automobile selon une ou plusieurs revendications précédentes, **caractérisée en ce qu'**une branche (4) d'une première partie de baguette (2) constitue sur le côté opposé à la face visible (6) un gradin de pose (9) sur lequel se place frontalement une branche (10) de la partie de baguette (3) intérieure.

4. Baguette de décoration pour véhicule automobile selon une ou plusieurs des revendications précédentes, **caractérisée en ce que** la partie de baguette (3) enfichée intérieurement présente, dans la zone d'enfichage, une section transversale en forme de U avec des branches (10, 11) s'étendant par tronçons, parallèlement.

5. Baguette de décoration pour véhicule automobile selon une ou plusieurs des revendications précédentes, **caractérisée en ce que** les deux parties de baguette (2, 3) sont bloquées contre tout déplacement mutuel par un capuchon (21) situé du côté frontal.

6. Baguette de décoration pour véhicule automobile selon une ou plusieurs des revendications précédentes, **caractérisée en ce que** le capuchon (21) s'engage dans l'espace des branches de U de la partie de baguette (3) enfichée intérieurement.

7. Baguette de décoration pour véhicule automobile selon une ou plusieurs des revendications précédentes, **caractérisée en ce qu'**une branche de capuchon (21) s'engage derrière la branche (4) opposée à la face visible (6) de la partie de baguette (2) enfichée extérieurement.

8. Baguette de décoration pour véhicule automobile selon une ou plusieurs des revendications précédentes, **caractérisée en ce que** le capuchon (21) présente une came d'encliquetage (26, 29) tournée vers une branche de U (10) de la partie de baguette (3) enfichée intérieurement et/ou vers une branche de U (4) de la partie de baguette (2) enfichée extérieurement.

9. Baguette de décoration pour véhicule automobile selon une ou plusieurs des revendications précédentes, **caractérisée en ce qu'**une came d'encliquetage (26, 29) du capuchon (21) s'engage dans une mortaise (27, 28) d'une partie de baguette (2, 3).

10. Baguette de décoration pour véhicule automobile selon une ou plusieurs des revendications précédentes, **caractérisée en ce que** deux cames d'encliquetage (26, 29) opposées sont formées, s'engageant dans une mortaise (27, 28) commune de la partie de baguette (3) enfichée intérieurement et de la partie de la baguette (2) enfichée extérieurement.

11. Baguette de décoration pour véhicule automobile selon une ou plusieurs des revendications précédentes, **caractérisée en ce que** le capuchon (21) est réalisé en matière synthétique.
